# EUROPEAN PATENT SPECIFICATION

(11) **EP 0 582 636 B1**
(45) Date of publication and mention of the grant of the patent: **19.01.2000**
(21) Application number: 92910188.9
(22) Date of filing: 29.04.1992
(51) Int. Cl.: G01N 27/30, G01N 27/406

(54) **Solid-state Reference Elektrode for a Ceramic Sensor**
Halbleiterreferenzelektrode für einen keramischen Sensor
Electrode de Référence a Semi-Conducteurs pour Capteur Ceramique

(30) Priority: 30.04.1991 DK 79491
(43) Date of publication of application: 16.02.1994
(73) Proprietor: PBI DEVELOPMENT A/S, 4100 Ringsted (DK)
(72) Inventor: JENSEN, Henning, DK-2000 Frederiksberg (DK); JEPSEN, Nis, DK-2830 Virum (DK)
(74) Representative: Raffnsoee, Knud Rosenstand
(86) International application number: DK9200135
(87) International publication number: WO9219962

(56) References cited:
- DE-A- 3 811 864
- US-A- 3 915 830
- US-A- 4 264 425
- US-A- 4 272 350
- US-A- 4 908 118

## Description

The invention relates to a half-cell for use in an ion-conductive solid-state ceramic sensor.

The disclosure of US-A 4 908 118 deals with a sensor for monitoring hydrogen concentrations in gases. A reference electrode exhibiting sodium ion activity and consisting for instance of NaₓWO₃ is used in said sensor. The reference electrode is produced by mixing nasicon-electrolyte powder with an appropriate carrier followed by sintering.

Owing to its design and due to the fact that a detector electrode of platinum, palladium or palladium oxide is used in said known sensor, ie. a material having a great hydrogen permeability, this prior art sensor is specifically determined to measure the hydrogen concentration in gases.

From DE-OS-38 11 864 there is known a measuring arrangement specifically adapted for the measurement of oxygen partial pressure in molten glass at high temperature. This measuring arrangement employs a reference electrode, which via an oxygen ion conducting heat resistant material is in electrochemical conductive contact with the liquid in which measurement is to be made. This measuring arrangement also includes a heating wire wrapped around the reference electrode for comparison of the reference temperature with the temperature of the liquid.

From US-A-4 272 350 there is known an electrochemical sensor comprising an internal reference electrode. This reference electrode is enclosed between an inert encapsulation and a solid electrolyte, which further is in connection with a non-encapsulated measuring electrode. The measurement of the physical quantity takes place between these two electrodes, each of which are connected to a respective signal wire. With this sensor construction appropriate choice of materials enables manufacture of sensors for different purposes. Further, owing to the construction a certain degree of temperature independence is achieved.

However, this prior art has the drawback that none of the chosen solutions attempt to work at the temperature best suited for the specific measurement.

Hence, it is the object of the present invention to provide a half-cell of the type recited in the opening paragraph, which may easily be designed for the measurement of a variety of substances and in a variety of fluids and which may regardless of which measurement it is designed for be heated to the temperature best suited for the specific measurement.

The invention achieves this object with a half-cell for use in an ion-conductive solid-state ceramic sensor, said half-cell comprising a body of a material having electronic as well as ionic conductivity, a capsule accommodating said body, a layer of a solid-state electrolyte material applied in contact with a first surface part of said body not covered by said capsule so as to complete the encapsulation of said body in said capsule, and a pair of contacts connected to surface parts of said body different from said first surface part, said pair of contacts being used both for supplying a measuring current through said body for measuring the impedance thereof between said pair of contacts to determine the actual average temperature of the body between said pair of contacts and, optionally, for supplying an electric current for heating said body prior to said impedance measurement and/or measuring the impedance of said body to determine the actual temperature of said body, said body thereby serving as a combined heating unit, temperature sensor and reference electrode, said solid-state electrolyte layer having a surface part for application of a covering of a task-specific measuring electrode to permit the use of said half-cell throughout a range of ceramic sensors having different custom-made measuring electrodes for measuring different physical quantities.

The invention will now be explained in detail in the following with reference to the schematical drawings, in which
Fig. 1 illustrates a preferred embodiment of the sensor according to the invention, and
Fig. 2 is a function chart illustrating the mode of operation of this sensor.

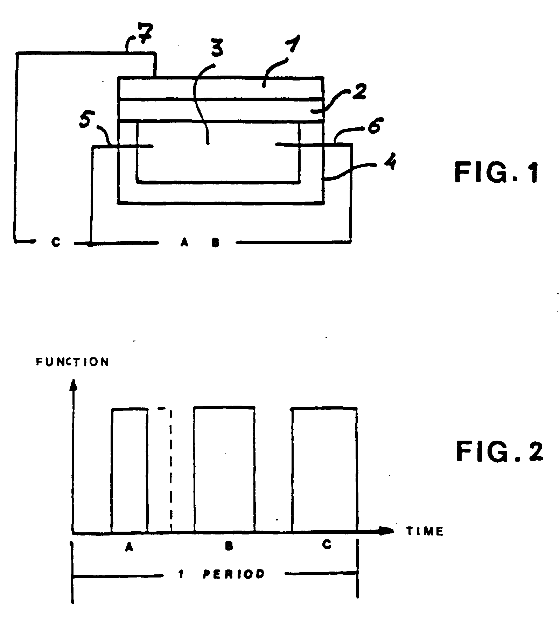

Fig. 1 shows a preferred embodiment of the sensor according to the invention. Reference numeral 1 shows a measuring electrode intended to be placed in the medium in which a measuring shall be undertaken. This electrode is formed as a layer of a material of an cific purpose by a suitable choice of the nature of the measuring electrode - is to be found in that by applying a suitable current signal to the body between its contacts, the body may be rapidly heated to the temperature that is the most appropriate for the actual measuring, and by measuring its temperature-dependent impedance between said contacts, information is immediately supplied about the actual temperature in the sensor and thus about the suitability of said temperature for the actual measuring.

The invention will now be explained in detail in the following with reference to the schematical drawings, in which
Fig. 1 illustrates a preferred embodiment of the sensor according to the invention, and
Fig. 2 is a function chart illustrating the mode of operation of this sensor.

Fig. 1 shows a preferred embodiment of the sensor according to the invention. Reference numeral 1 shows a measuring electrode intended to be placed in the medium in which a measuring shall be undertaken. This electrode is formed as a layer of a material of an appropriate type adjusting itself into thermo-dynamic balance with the substance the concentration of which is to be measured. The measuring electrode may for instance consist of platinum if oxygen measuring is desired, and of palladium or palladium oxides if hydrogen measuring is desired, or Na₂CO₃ for COₓ-measuring, Na₂SO₄ for SOₓ-measuring, and so on.

Reference numeral 3 shows a body constituting a combination of a heating unit, a temperature sensor and a reference electrode, and consisting e.g. of a sodium-cobaltite compound. Said unit may be provided by the thick-film technology as well as by the thin-film technology.

Body 3 is accommodated within a capsule 4, e.g. of glass, and is kept encapsulated therein by an electrolyte layer 2 that may consist of stabilized ZrO₂ or nasicon.

The sensor is provided so that the body 3 is in connection with contacts 5, 6, while the measuring electrode 1 is in connection with a contact 7.

The flow chart in Fig. 2 illustrates the mode of operation of the sensor according to the invention. Within a measuring period, as shown along the time axis in the chart, a preferably pulse-width modulated current signal is at first applied, as shown by partial period A - between the contacts 5 and 6 - with the purpose of heating the body 3 to the temperature wanted for the actual measuring. The dot-and-dash line in partial period A in the chart reflects the pulse width modulation.

After completion of partial period A, the temperature in body 3 is measured in partial period B, e.g. by measuring the temperature-dependent impedance of the electrode between contacts 5 and 6.

In partial period C, between the contact 7 of the measuring electrode 1 and one or the other contact of the body 3, e.g. contact 5, sensor measuring is effected with the view of obtaining the desired value of measurement.

Said sensor measuring may be potentiometric (measurement of electromotive force) or potentiostatic (measurement of current).

A sensor so designed may be produced in quite small dimensions e.g. of 2 x 3 x 8 mm, with threads of a diameter e.g. of 0.1 mm.

The sensor may be used for measurement in pure gases, combustion gases or atmosphere, at temperarures exceeding 200°C. It may also be used for measurement in drinking water, sea water or domestic or industrial effluent, normally at temperatures not exceeding e.g. 80°C. It may further - normally at temperatures below or nasicon but other materials may as well be used, such as Na-β''-Al₂O₃ or various polymers.

The choice of convenient combinations of materials for the measuring electrode 1, the electrolyte layer 2 and the body 3 offers the possibility of designing sensors for specific measuring purposes.

## Claims

1. A half-cell for use in an ion-conductive solid-state ceramic sensor, said half-cell comprising a body (3) of a material having electronic as well as ionic conductivity, a capsule (4) accommodating said body, a layer (2) of a solid-state electrolyte material applied in contact with a first surface part of said body (3) not covered by said capsule (4) so as to complete the encapsulation of said body in said capsule, and a pair of contacts (5,6) connected to surface parts of said body different from said first surface part, said pair of contacts (5,6) being used both for supplying a measuring current through said body for measuring the impedance thereof between said pair of contacts to determine the actual average temperature of the body between said pair of contacts and, optionally, for supplying an electric current for heating said body prior to said impedance measurement and/or measuring the impedance of said body to determine the actual temperature of said body, said body thereby serving as a combined heating unit, temperature sensor and reference electrode, said solid-state electrolyte layer having a surface part for application of a covering (1) of a task-specific measuring electrode to permit the use of said half-cell throughout a range of ceramic sensors having different custom-made measuring electrodes for measuring different physical quantities.

2. A ceramic sensor according to claim 1, **characterized** in that a contact (7) is provided on said measuring electrode (1) for the output of a measured value in relation to one of said contacts (5,6) of said body (3).

## Patentansprüche

1. Halbzelle zur Verwendung in einem ionenleitenden keramischen Feststoffsensor, welche Halbzelle einen Körper (3) aus sowohl elektronen- als ionenleitendem Material, eine erwähnten Körper beinhaltende Kapsel (4), eine aus Feststoff-Elektrolytmaterial bestehende, in Kontakt mit einem ersten, nicht von der Kapsel (4) gedeckten Oberflächenteil des Körpers zur Vollendung der Einkapselung des Körpers in der Kapsel aufgetragene Schicht (2), und ein an andere Oberflächenteile des Körpers als den ersten Oberflächenteil angeschlossenes Paar von Kontakten (5, 6) umfasst, welches Paar von Kontakten (5, 6) sowohl zur Versorgung eines Messstroms durch den Körper zur Messung dessen Impedanz zwischen dem Paar von Kontakten und zur Ermittlung der faktischen Durchschnittstemperatur des Körpers zwischen erwähntem Paar von Kontakten als fakultativ zum Versorgen von elektrischem Strom zum Erhitzen des Körpers vor dem Messen der Impedanz und/oder Messen der Impedanz erwähnten Körpers zwecks Bestimmen der faktischen Temperatur des Körpers benutzt wird, wobei der Körper somit als kombinierte Heizeinrichtung, Temperaturfühler und Referenzelektrode dient, und die Feststoff-Elektrolytschicht einen Oberflächenteil zum Auftragen einer Umhüllung (1) einer aufgabenbestimmten Messelektrode aufweist, um zu ermöglichen, dass die Halbzelle in einer Reihe von keramischen Sensoren mit unterschiedlichen spezialhergestellten Elektroden zum Messen verschiedener physikalischer Grössen Anwendung findet.

2. Keramischer Sensor nach Anspruch 1, dadurch **gekennzeichnet**, dass die Messelektrode (1) mit einem Kontakt (7) zur Ausgabe eines im Verhältnis zu einem der Kontakte (5, 6) des Körpers (3) gemessenen Wertes versehen ist.

## Revendications

1. Demi-cellule à utiliser dans un capteur céramique à conduction ionique et à état solide, demi-cellule qui comprend un corps (3) d'un matériau à la fois à conduction électronique et ionique, une capsule (4) logeant le corps, une couche (2) d'un matériau électrolytique à état solide appliquée en contact avec une première portion de surface dudit corps (3), portion qui n'est pas couverte par ladite capsule (4), pour accomplir l'encapsulation du corps dans la capsule, et une paire de contacts (5, 6) reliée à d'autres portions de surface dudit corps que ladite première portion de surface, paire de contacts (5, 6) qui sert tant à fournir un courant de mesure à travers ledit corps afin de mesurer l'impédance de celui-ci entre ladite paire de contacts pour déterminer la température moyenne effective du corps entre ladite paire de contacts, facultativement qu'à fournir un courant électrique afin de chauffer ledit corps avant ladite mesure d'impédance et/ou à mesurer l'impédance dudit corps afin de déterminer la température effective dudit corps, ledit corps ainsi servant comme une combinaison de dispositif de chauffage, de détecteur de température et d'électrode de référence, ladite couche électrolytique à état solide présentant une portion de surface pour application d'un recouvrement (1) d'une électrode de mesure à des fins précises afin de permettre l'usage de ladite demi-cellule dans une grande diversité de capteurs céramiques ayant de différentes électrodes de mesure fabriquées sur commande pour mesurer de diverses quantités physiques.

2. Capteur céramique selon la revendication 1, **caractérisé** en ce qu'un contact (7) est pourvu sur ladite électrode de mesure (1) pour sortir une valeur mesurée par rapport à l'un desdits contacts (5, 6) dudit corps (3).
